(19) **Europäisches Patentamt**
**European Patent Office**
**Office européen des brevets**

(11) **EP 2 236 474 A1**

(12) **EUROPEAN PATENT APPLICATION**

(43) Date of publication:
**06.10.2010 Bulletin 2010/40**

(51) Int Cl.:
*C04B 24/02* (2006.01)    *C04B 24/12* (2006.01)
*C04B 28/02* (2006.01)

(21) Application number: **10152766.1**

(22) Date of filing: **05.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.02.2009 EP 09152294**

(71) Applicant: **Unger, Alexander**
**86609 Donauwörth (DE)**

(72) Inventor: **Unger, Alexander**
**86609 Donauwörth (DE)**

(74) Representative: **Fleuchaus, Andrea**
**Fleuchaus & Gallo Partnerschaft**
**Patent- und Rechtsanwälte**
**Sollner Strasse 36**
**81479 München (DE)**

(54) **Thin floating screed**

(57) The present invention refers to the refurbishment sector and particularly the renovation of floor constructions in old buildings. The present invention provides newly developed extremely thin floating screeds as well as specialised admixtures comprising organic additives particularly useful to meet the needs of the renovation sector.

EP 2 236 474 A1

**Description**

The present invention refers to the refurbishment sector and particularly the renovation of floor constructions in old buildings. The present invention provides newly developed extremely thin floating screeds as well as specialised admixtures particularly useful to meet the needs of the renovation sector.

In the Federal Republic of Germany the refurbishment of old buildings is gaining momentum. The majority of the existing flats was built before the first thermal insulation regulation, thus the demand for rehabilitation measures is high. According to a report published by the German government in 2006, 70% of flats need to be refurbished from an energetic point of view. But there is not only the need to save energy, because standard screeds have a live expectancy of about 50 years and usually have to be exchanged afterwards, many measures are of a constructive natures. Accordingly, it is the aim of this invention to improve the present screed laying techniques and develop a screed, which is able to overcome the present problems when renovating old houses. These problems have been solved by the extremely thin floating screed according to claim 1, which is prepared by mixing usual screed materials, metal fibres and an admixture. This screed of the invention is after laying treated according to an adapted method applying a trowelling machine. The high quality of the screed of the invention is described by its improved mechanical properties.

The resulting screed according to the invention shows several advantages over screeds in compliance with the present state of the art. Firstly, it is extremely thin, which is important because in old houses the potential thickness is generally limited. Secondly, it is weight-reduced, which is highly important in old buildings in order not to overload the floor construction. Thirdly, the screed according to the invention shows less shrinkage and a quicker strength development than normal cementitious screeds. It further allows vapour diffusion.

Apart from these advantages it goes without saying that the screed of the invention shows the same properties as ordinary screeds and withstands easily the normal floor loading without any damages and furthermore is not combustible. Thus, the screed of the invention provides many technical benefits, which directly translate into practical use.

To fulfil these needs the main effort and creative input lies in developing a suitable admixture, selecting appropriate reinforcement and combining them with the basic elements for screed, such as cement, mineral aggregates, metal or steel fibres and water.

The general composition according to the invention therefore comprises about

- 67 - 82 % mineral aggregates
- 8 - 15 % cement
- 0,5 - 3 % metal fibres
- 1 - 4, 5 % water
- 0,2 - 1 % admixture.

After mixing the final mixture has a preferred water-cement ration of 0.5 to 0.8.

According to the invention "cement" is used as bonding agent because it is available in almost all countries and craftspeople are familiar with its processing. Moreover, cement has the advantage of being insensitive to moisture (which is important for wet rooms) and its qualities can easily be defined with the help of admixtures. The term "cement" comprises different qualities and preparations, and particularly the ones described below.

Another benefit of cement is the fact that DIN EN 197-1 clearly regulates the selection of cement constituents whereas this is not the case with many of the other bonding agents. Nowadays, cements are chromate-reduced and are safe to handle if the necessary precautions are taken. The aforementioned standard specifies that any cement with the designation 'CEM I' must have a share of Portland cement of at least 95 %. This is very important because many additives do not contribute to the strength development and may have adverse side effects. Often they show latent-hydraulic properties and will only build up additional strength if water is provided after the laying process. This may work with outdoor concrete units but not indoors.

Therefore, normally only CEM I products are used for quick-drying cementitious screeds. CEM II products like e.g. CEM II/A-L can be employed if it is proved that they have similar properties as CEM I cements and will harmonize with the admixture used. To positively influence the properties of the screed of the invention a high-grade cement with the denomination CEM I 42.5 R will be used which is ground more finely than the usual CEM I 32.5 R. This leads to a quicker reaction rate, which is especially important in the cold season to ensure that the hydration works properly.

Furthermore, a quicker reaction rate is beneficial when quick-drying screed features are needed. Thanks to the finer grinding a higher screed strength and a better surface quality can be reached. The result is a reduced dusting and an increased surface tensile strength. The latter facilitates the placing of highly demanding floor coverings like parquet or synthetic-resin coatings. Another reason for using high-grade cement might be the fact that the quality of the mineral aggregates underlies variation. Generally spoken, high-quality cement can partly compensate for shortcomings in the composition of the mineral aggregates. According to further embodiments of the invention between 8 and 15% of the weight of the whole batch is cement.

The typical "mineral aggregate" used for conventional screeds as well as for the invention is sand with a grain size in a mixed range of 0-8 mm, particularly selected from the ranges 0-2 mm, 2-4 mm, 4-6 mm, 6-8 mm or combinations thereof. This sand will be preferred also for the screed of the invention.

It makes no sense to stipulate that only special mineral aggregates must be employed, which might not be available everywhere. Some producers of high-grade screeds demand that 20 % of the mineral aggregates have to be replaced by chipping, others require that 50 % of the mineral aggregates must have a grain size of 0-4 mm and the remaining 50 % of 4-8 mm. It cannot be doubted that these measures have positive effects on the screed properties. Unfortunately, these properties are frequently reached only in laboratory tests and cannot be achieved in practice. Small quantities of the mineral aggregate can easily be singled out to meet such demands. But on the construction site the workers have to cope with the fact that the batches of sand delivered show a very different composition. For this reason, the screed formulation must compensate for the usual shortcomings in the composition of the mineral aggregates.

Within the screed of the invention the mineral aggregates take up between 67 and 82 % of the weight of the whole batch. According to embodiments of the invention between 67 and 82 % mineral aggregate are used for the screed of the invention.

In this context the pump operator plays an important role, too, as he/she has to react to relevant changes in the sand composition by adapting the mix proportion. An ideal mineral aggregate for screeds should have a grain-size distribution curve which lies between the A-curve (DIN1045-2) and the B-curve (DIN1045-2).

A lot of the mineral aggregates in use will not show a grain-size distribution curve between the A/B-curve. Generally speaking, the sand mix preferred by screed layers contains more fines, which makes the screed easier to trowel. Unfortunately, such a mineral aggregate will result in a lower strength and in higher residual moisture content when compared to the 'ideal' curve. Therefore, great importance should be attached to the fact that the granulometric composition of the mineral aggregate chosen lies between the A-curve and the B-curve or at least on the B-curve.

Two newly developed admixtures are employed for the screed of the invention. Each will be added to the mixing vessel in order to ensure the following qualities:

- Reduction of the water content within the screed mortar.
- Quick drying process.
- Reduced shrinkage.
- Increased flexural tensile and compressive strength.
- Increased surface stability.

The admixtures are a balanced combination of organic and inorganic constituents, which have plasticizing, accelerating and stabilizing effects and should help to achieve a better degree of hydration. The composition influences the rheologic properties of the cement paste by interfacial activity. The grade of viscosity is decreased by the dispersing effect of the additives on the solid particles (modification of the zeta potential). Adsorptive effects reduce the nucleus size but increase the number of nuclei, which accelerates hydration after the dormant phase. The influence on the formation of calcium silicates, calcium aluminates and calcium sulphates as well as on the concentration of OH-ions contributes to the hardening and the hydration process.

Therefore, the admixture of the invention is a co-polymerising composition, which comprises the organic substances vinyl chloride, vinyl acetate, ethylen, ethoxylated alcohols, melamine resin and optionally water.

The ethoxylated alcohols may be selected from the group consisting of C3- to C20 alcohols, preferably C3, C4, C6, C12, C13, C14, C15 or combinations thereof. While for the liquid admixture the addition of C3 to C12 alcohols are preferred, for the powder form of the admixture the addition of C12 to C20 alcohols are preferred. According to a preferred embodiment the ethoxylated alcohols are secondary alcohols. Secondary alcohols according to the present invention are alcohols where the C-atom having the hydroxyl group is linked to two further C-atoms. As a secondary alcohol seems to resemble in his physical characteristics a primary alcohol with less C-atoms than said secondary alcohol, it was advantageous for the liquid as well as the powdered form of the admixture to use according to a preferred embodiment to use ethoxylated C12 alcohol.

The melamine resin, preferably melamine sulfonate can be added as monomers or polymerised.

Furthermore, the admixture can optionally be modulated by the addition of polyvinyl chloride, preservative agents, conservatives and/or colour. In one embodiment the liquid admixture comprises in an aqueous dispersion or dissolved in an organic solvent about 5-10 %, preferably 6%, 6-9% or 7-8% vinyl chloride, 10-20%, preferably 14%, 12-18% or 13-16% vinyl acetate, 5-10 %, preferably 6%, 6-9% or 7-8% ethylen, 10-30%, preferably 15%, 12-18% or 15-25% ethoxylated C3 to C 12 alcohol or combinations thereof, 20-30%, preferably 27%, 22-28% or 25-29% melamine sulfonate, optionally 0,1 % preservative agent, optionally 0,1 % colour and water.

In a further embodiment the admixture in powder form comprises about 5-10 %, 6%, 6-9% or 7-8% vinyl chloride, 10-20%, preferably 14%, 12-18% or 13-16% vinyl acetate, 5-10 %, preferably 6%, 6-9% or 7-8% ethylen, 10-30%, preferably 12%, 18%, 22%, 10-18% or 12-25% ethoxylated C12 to C15 alcohol or combinations thereof, 20-30%, preferably 27%, 22-28% or 25-29% melamine sulfonate, optionally 0,1 % preservative agent, optionally 0,1 % colour and water.

It is believed without being bound to the theory that the ethoxylated alcohols when they get contact to e.g. basic catalysts such as the salts contained in the cement or the mineral aggregates initiate or support the polymerisation and copolymerisation of the various ingredients of the admixture. Thereby assisting the homogenous formation of the binding agent of the screed of the invention.

The total amount of the admixture in the final screed amounts to about 0,2 and 1%, preferably 0,4 and 0,7%.

The first test series carried out with the liquid admixture confirmed the desired characteristics (see Examples). The flexural as well as the compressive strength were augmented, which led to a reduced deflection. Due to the considerable reduction of mixing water, the screed strength was significantly increased. At the same time, a very ductile mortar consistency was achieved, which facilitated the compaction of the screed. The fact that only a small amount of mixing water was used entailed a minimised but still practically orientated shrinkage coefficient.

A second test series was carried out with an admixture in powder form, which led to a quick drying as well as to a rapid strength development (see example). At the same time, the admixture increased the final screed strength. The homogeneous drying process reduced the deformation and the strain in the course of hardening. Also, the pre-stress loss was influenced positively.

The reason for using two different admixtures is that is was of interest to find out whether a liquid admixture or an admixture in powder form showed a better performance with the screed of the invention.

The general approach with any admixture is to reduce the water-cement ratio to the necessary minimum value of about 0.40. Roughly 25 % of the water quantity is bonded chemically and 15 % is bonded physically. Ratios > 0.40 entail additional mixing water, which remains in the pores and will evaporate later. This additional water has a lot of negative side effects like e.g. lower screed strength and a slower drying of the load-bearing layer. Placing a screed with a water-cement ratio of 0.40 would bring about an extremely quick-drying high-grade screed with minimised shrinkage/deformation. The only problem is that the resulting mortar consistency does usually not allow proper screeding and trowelling. Often the composition of the screed material is quite inhomogeneous then and shows entirely divergent strength values.

Superplasticizing admixtures can help to reduce the water-cement ratio to a realistic value of about 0.50-0.70. An important precondition for these admixtures to have the desired effect is a sufficiently long mixing period. It is needed to permit the admixture to spread throughout the whole batch and to react with the cement and the other constituents. In this way a homogeneous mortar mix is achieved, which will be a lot easier to screed and trowel. Usually, the mixing period should last between two and three minutes after all the constituents have been placed into the vessel.

To be apt for the use within screeds in the refurbishment area a convenient reinforcement should be capable of preventing crack dislocation and of enhancing the structural screed strength. With heated screeds the thermal conductivity of the screed should be improved by the reinforcement, too. Furthermore, it should be observed that the water-cement ratio of the screed is not increased by using materials, which will raise the required amount of water in the batch. Within the screed of the invention water takes up between 1 and 4,5% of the weight of the whole batch. According to another embodiment of the invention the total amount of water in the screed of the invention is about 1 to 3% of the weight of the whole batch.

The only reinforcement capable of combining the desired properties are metal or steel fibres. If the dosage is chosen correctly they should

- prevent crack dislocation (particularly important under stone and ceramic floor coverings),
- enhance the structural strength of the screed,
- make it possible to reduce the screed thickness to a certain extent,
- prevent contraction cracks formed at an early stage to a certain degree,
- increase the screed stability on wood joist ceilings,
- improve the thermal conductivity,
- not raise the required amount of water to a relevant degree.

For the screed of the invention sheet cut fibres will preferably be used. The big advantage is the fact that their processing is quite easy. Hooked ends will improve the post-failure behaviour regarding tensile strength and ductility. After the stress, the fibres will deform into a straight line. The thinner the fibre, the more fibres will have space in one cubic metre of mortar. This has a positive effect on the reinforcement properties of the screed. For the screed of the invention extra thin sheet cut fibres of a special design will be used. Their width will amount to 0.8 mm instead of the normal 1.2 mm. The exact parameters of these *RS-0.8* fibres are:

- Applicable standard: DIN EN 10 139
- Material: DC 01 (sheet quality).

- Tensile strength: 700 N/mm$^2$ $\pm$ 15 %.
- Fibre length 1: 20 mm $\pm$ 10 %.
- Fibre width w: 0.8 mm $\pm$ 10 %.
- Fibre thickness t: 0.5 mm $\pm$ 0.1 mm.
- Bending angle of the fibre: minimum 20°.
- Shape: rectangular

According to embodiments of the invention the total amount of steel or metal fibres in the screed of the invention is about 0,5 to 3%. Within the screed of the invention the steel fibres take up between 0,5 and 3% of the weight of the whole batch.

In tests the fibres will affect the compressive strength and the flexural tensile strength of the screed only to a small degree because for this purpose above all the mortar composition is relevant. In practice though, the fibres will still carry even if the screed already shows cracks, which in turn will affect the flexural tensile strength. Bigger cracks (in mortars without fibres) are spread into many fine and nearly invisible cracks.

Since the subject of fire protection is also of increasing importance in the field of floor construction, it is essential that this point should be considered when creating the screed of the invention. According to DIN 18 560-1, cement concrete may be classified as A1 material (European class: $A_{fl}$) if the percentage of organic substances does not exceed one percent. The ingredient capable of raising the amount of organic substances in cementitious screeds above one percent is usually the admixture. This is the reason why, in the case of the screed of the invention, the dosage of the admixture was calculated in such a fashion that the share of organic ingredients lies below one percent. The mixing vessel of a compressed air conveyor should usually be filled until it contains 200 1 of mortar. The weight of this batch can be calculated as follows:

200 l x 2.155 kg/l = 431 kg
(2.155 kg/l = Average apparent density of the screed of the invention)

In this case one percent would correspond to 4.31 kg. The liquid admixture tested in the screed of the invention shows a dosage of 6 % relating to the weight of the cement. 6 % of 50 kg corresponds to 3 kg. With the screed of the invention the share of solids within the dispersion amounts to 50 %. Since not all of these solids are of organic origin, the share of organic substances will be lower than 50 %. Nevertheless, as a safety factor, the value of 50 % will be used for the calculation. As the resulting value of 1.5 kg is lower than 4.31 kg, the precondition that the organic substances have to be smaller than one percent is fulfilled. The admixture in powder form tested on the screed of the invention shows a dosage of 8.8 % relating to the weight of the cement. 8.8 % of 50 kg correspond to 4.4 kg. The share of organic substances within this product amounts to 55 %. Since the resulting value of 2.42 kg is lower than 4.31 kg, the precondition that the organic substances have to be smaller than one percent is fulfilled. According to DIN 18 560-1 no further tests are required to corroborate this assumption. The screed of the invention will not fuel fires and can be classified as A1 material (European class: $A_{fl}$).

Furthermore the screed of the invention will have the same expansion coefficient as conventional cementitious screeds because the main constituents are similar. Hence, for load-bearing layers in combination with underfloor heating systems or any other form of heated screed movement joints will be needed. Other forms of heated screeds may be load-bearing layers behind a big glass façade or in outside areas for example. Each screed type shows an individual expansion coefficient. For cementitious screeds e.g. this value is 0.012 mm per [K] temperature change and per [m] length of the screed bay.

Example calculation for a cementitious floating screed with underfloor heating system.

0.012 mm (expansion coefficient of CTs) x 40 K (temperature change - characteristic value for screeds with

underfloor heating systems including a high safety factor) x 10 m (length of the screed bay) = 4.8 mm

That is to say that this specific screed bay with a length of ten metres would expand 4.8 mm when its temperature is increased by 40 K. It goes without saying that the temperature change value always has to be calculated in accordance with the specific situation. To absorb the expected expansion perimeter-isolating strips have to be placed against all neighbouring building units. Additionally, movement joints within the screed bay are necessary if the perimeter joints do not suffice to absorb the maximum expansion of the floor construction. Convenient edge strips for heated screeds have to absorb a screed expansion of up to 5 mm. If the calculated expansion reaches this value, it will not be necessary to insert additional movement joints within the bay. If, however, the calculated expansion is higher than 5 mm, it will be necessary to insert additional movement joints within the bay. This is due to the fact that it cannot be predicted, in which direction the expansion will take place. One factor of influence in this context is the frictional resistance of the substructure.

The design of movement joints has to be adjusted to the specific building. When dealing with heated screeds such joints have to be inserted either after a bay length of about 8 m, in doorways and between heating circuits with potentially divergent temperatures. With unheated floating screeds and screeds placed on a separating layer, movement joints should be planned after 15 m at the latest. Outdoors movement joints will have to be inserted after 1.5 to 3 m only. A general problem concerning conventional movement joints within screeds is the fact that there may be vertical dislocations of the joint edges due to shrinkage and subsequent deformation.

To avoid this phenomenon with the screed of the invention, a special dowel joint will be used. It consists of a slim steel rod, a matching plastic socket and soft polystyrene insulation boards which leave room for expansion. The dowels will have to be placed at the centre of the screed cross-section and are introduced at intervals of about 30 cm. It is important that the dowels and sockets are aligned parallel to allow for the movement of the screed. In this way the construction will permit horizontal movement and impede vertical dislocation at the same time.

Induced contraction joints are necessary because cementitious load-bearing layers in particular undergo shrinkage, which will lead to a contraction of the bay. If rooms have a quadratic shape and are not too big, induced contraction joints can often be foregone. However, if a room shows a width-to-length ratio of 1:2 or even 1:3, induced contraction joints have to be inserted. In these cases the room can be broken down into two or three consecutive circles and each one will shrink towards its centre. As said above, cracks are to be expected where one circle touches another. The logical result is that induced contraction joints should be inserted exactly in these spots. With standard cementitious screeds the joints are cut in with the help of a smoothing trowel after the load-bearing layer has been laid. The cutting depth is usually a third of the screed height. Alongside the joint, the load-bearing layer is weakened and will crack in the form of a straight line after the shrinkage process has started. When the cementitious screed will have dried out to a value of 2 CM-% (heated screeds to ≤ 1.8 CM-%), the induced contraction joints have to be filled with pegs and synthetic resin to guarantee an adequate force transmission. Next, the synthetic resin has to be gritted with quartz sand to ensure the bonding with the adhesive.

Despite reduced contraction with the screed of the invention, certain shrinkage must still be expected, so induced contraction joints will be inserted into the screed. They will not be cut in, however. Instead, plastic profiles will be placed level with the screed surface in a straight line and will remain within the load-bearing layer. Because of their cross-shaped design, a stabilization of the screed slabs around the joint is reached in order to avoid dislocation.

Above the upper vertical leg of the profile, the screed will crack in a slightly uneven fashion. Often, standard floor coverings can be laid over the profile without previous filling. However, with thin elastic (e.g. linoleum), stone and ceramic floorings or long periods without floor covering it makes sense to lock the joint with the help of pegs and synthetic resin. To remove the profile for this purpose would entail a lot of work. For this reason, the joints should be locked in a zigzag pattern. Sometimes the joints can also be integrated into the floor covering by the use of convenient covering profiles. For screeds with finished surfaces, metal profiles may be used whose upper vertical leg will be visible from above. Normally, they consist of two metal set squares joined by an expanded natural rubber, which is glued to each vertical leg of the profile.

The perimeter joint is a movement joint, which separates the entire floor from neighbouring building units as, for example, walls and columns. The goal is to allow for a horizontal screed expansion and to reduce heat and sound conduction at the same time. Perimeter isolation strips are primarily used with floating screeds and ones placed on a separating layer. A high perimeter isolating strip can also come in handy to prevent the soiling of the walls with mortar splashes. This measure is highly recommended in the vicinity of architectural concrete walls.

According to DIN 18 560-2 the height of perimeter isolating strips should allow for an effective separation of the whole floor construction (floor covering included) from neighbouring building units. To avoid sound bridges with multilayered insulating materials, edge strips have to be placed before the footfall sound insulation is laid. For the same reason protruding edge strips and protecting foils must not be cut before the flooring is laid. With textile and elastic floor coverings, the smoothing compound should have hardened first, while with stone and ceramic floorings, the jointing has to be done before the strips/foils can be cut. If these recommendations are not observed, mortar or other rigid materials may fill the perimeter joints in various spots. If this is the case, the whole floor construction has no room to expand which in turn might lead to sound bridges, cracks and deformation.

For edge strips, materials like mineral wool, polystyrene, corrugated board and increasingly polyethylene foam are used. In combination with the screed of the invention, mineral wool will be chosen to upgrade the behaviour under fire and the footfall sound insulation. One option to improve the impermeability and to reduce the risk of sound bridges is to attach foil flaps to the strips. With cementitious load-bearing layers, perimeter joints should allow for a screed expansion of at least 5 mm. The norms require that this should only be necessary for heated screeds but, in the author's opinion, it ought to be generally observed. A lot of perimeter isolation strips can be found on the market, which will not meet this request. It should be noted in this context that the strips will not compress entirely. Mineral wool can be compressed quite easily whereas polyethylene foam strips usually show a maximum compressibility of 70 %.

Conventional laying techniques usually limit the average daily output of floating cementitious screeds to 100-200 m2. For this reason, it is necessary to finish the screed bay in a way, which facilitates the continuation of the works on the next day. Normally, this is done by setting a stop end with the help of a timber plank. The next day the timber plank is removed and the new screed bay is added to the already existing one. To avoid vertical dislocation with the screed of the invention, slim sockets can be placed (at the end of the working day) within the load-bearing layer alongside the construction joint. Before the new screed bay is added, matching steel rods can be inserted in the sockets.

Later, the construction joint should be filled with synthetic resin to ensure a sufficient force transmission. Before this measure is taken, a CM-moisture test should be conducted so that the load-bearing layer will no longer shrink to a relevant degree. If the construction joint was sealed conveniently, it is not obligatory to insert a joint in the same spot within the floor covering. The screed consisting of various interlocked bays can then be considered as 'built in one piece'.

With the screed of the invention the mixing period must mount up to three minutes after all the components have been added to the vessel. If this demand is fulfilled, the different constituents will have sufficient time to react and the mortar will be a lot more homogeneous. After the cementitious grout has been screeded, the craftspeople will have to wait for about 30 minutes until the load-bearing layer will have built up enough strength to bear the weight of a trowelling machine. Of course, this time specification also depends on the mesoclimate on the construction site. To avoid leaving footprints or sinking into the fresh screed, the craftspeople will wear special load-distributing 'trowelling shoes' made of sheet plates. In this way they can do without 'trowelling footstools', which might damage the protecting foil and - with heated screeds - the heating pipes. The big advantage of employing the quite heavy trowelling machines is that an additional compaction of the mortar can be achieved. If necessary, the screed surface will be smoothened 'by hand' in a second go with the help of a trowel. Since load-bearing layers in the refurbishment area have to be relatively thin, it will be possible to compress almost the whole screed cross-section by this means. In this way an adequate compaction and strength of the surface will be reached, which could not be achieved if the trowelling was done only 'by hand'.

With thin refurbishment screeds though, attaining an optimal strength is vital. This quality can only be accomplished in combination with a suitable working technique.

Of major significance for the success of a thin refurbishment screed like the screed of the invention is the screed strength. Only if these load-bearing layers reach a high strength, can their thickness and their weight be reduced. With floating screeds the more important factor in this context is the flexural tensile strength. Loads will primarily entail tension at the bottom face of the screed. The flexural tensile strength is a parameter for the screed strength, which is not dependent on the thickness of the load-bearing layer. For testing purposes the sample has to be manufactured according to DIN EN 13 892-1. Then it is placed on two supporting edges and charged centrally from above until the prism breaks. In this process the tension zone will be situated at the upper face and the compression zone at the bottom face of the screed. The flexural tensile strength is calculated in the following way:

$$\text{Flexural tensile strength} \quad \beta_f = \frac{1.5 \, x \, F \, x \, s}{w \, x \, t^2} \quad [\text{N/mm}^2]$$

$$F = \text{Breaking force [N]} \quad - \quad s = \text{span [mm]} \quad - \quad w = \text{width [mm]}$$

$$t = \text{thickness [mm]}$$

The prisms manufactured according to one embodiment of the invention and measured on day 7 after laying showed a tensile strength (flexural tensil strength) between 5.5 and 7 N/mm2 and/or on day 28 after laying a tensile strength between 7.5 and 9 N/mm2. These measurements are performed according to standardised test, which are also described in the examples.

It should be kept in mind that loads will also lead to compression at the upper face of the load bearing layer. For testing purposes the sample has to be manufactured according to DIN EN 13 892-1. Then it is compressed until the prism breaks. The compressive strength is calculated in the following way:

$$\text{Compressive strength} \quad \beta_c = \frac{F}{A} \quad [\text{N/mm}^2]$$

$$F = \text{Breaking force [N]} \quad - \quad A = \text{Compression area [mm}^2]$$

The prisms manufactured according to one embodiment of the invention and measured on day 7 after laying showed a compressive strength between 35 and 50 N/mm2 and/or on day 28 after laying a compressive strength between 55 and 70 N/mm2. These measurements are performed according to standardised test, which are also described in the examples.

The screed strength could also be the key to a deflection complying with the standards.

In summary, the screed of the invention shows very favourable values for compressive strength, flexural tensile strength as well as apparent density and thus completely fulfils the object of the invention.

Its compressive strength is better than that of the comparable test screeds and ranches for prisms made out the screed of the invention depending on the time of drying between 35 and 50 N/mm2 (7 days after laying) and 55 and 70 N/mm2 (28 days after laying).

Its tensile strength is also better than that of the comparable test screeds and ranches for prisms made out the screed of the invention depending on the time of drying between 5,5 and 7 N/mm2 (7 days after laying) and 7,5 and 9 N/mm2 (28 days after laying). Samples, which were cut out of a thin floating screed of the invention after 28 days of drying had an even higher flexural tensile strength of about 5,5 to 15,5 N/mm2.

Of particular importance was also that the density of the screed of the invention and, thus, the dead weight, which is significantly less compared with normal test screed. The apparent density of the screed of the invention is between 2,05 and 2,25 kg/m3, preferably between 2,09 and 2,22 kg/m3.

The target density of 70-80 kg/m$^2$ with unheated screeds could be achieved by reaching a dead weight of about 75 kg/m$^2$.

Additionally, the screed of the invention shows on day 7 a residual moisture content of less or equal 2 % measured with the calzium-carbid-method after 10 minutes (CM < 2%).

Additionally, the screed of the invention shows on day 28 a shrinkage of about -0,2 to -0,4 mm/m.

The present invention has been described in details and with particular reference to the preferred embodiments. However, it will be understood by one having ordinary skill in the art that changes can be made without departing from the teaching or scope of the present invention.

## Examples

The tests have been conducted in the Laboratory for Building Materials at the University of Applied Sciences in Augsburg/Germany. In order to achieve a highly practical orientation, the mortar was mixed and pumped with the help of a compressed air conveyor. The idea was to create the screed of the invention under realistic circumstances. The screed was processed as it is done in practice. The tests were not only conducted on prisms but on real sample areas. The screed of the invention was laid in the basement under the laboratory rooms of the University of Applied Sciences in Augsburg. The testing equipment could not be removed or altered by other craftspeople, and second the rooms had a height of 2.55 m and showed a mesoclimate comparable to the one on the construction site.

### 1. First test series: Mixing the screed of the invention with the help of a liquid admixture in comparison to a standard mortar composition

First of all, two shutters with the dimensions of 2.70 x 3.60 m and a total height of 5.5 cm each were assembled. After that, perimeter isolation strips were installed against the shutter and around a small platform in the middle, which was to carry the measuring instruments. After that, a polystyrene insulating layer (EPS-040-DEO) with a thickness of 2 cm was placed on the concrete slab. Then, the protecting foil was laid on the insulation to shield it against moisture from the mortar. The air in the room showed a temperature of 18 degrees Celsius and a relative humidity of 68 % before the screed was laid. The calculated proportions of both mixtures can be seen in the next Table 1. It was opted for a realistic air proportion of 25 % in the mixing vessel.

**Table 1:** Mix proportion of the 1st test series

|  | CM | CM | CM | RS | RS | RS |
|---|---|---|---|---|---|---|
| Fresh mortar volume in the mixing vessel [dm$^3$] | 200.0 | 200.0 | 200.0 | 200.0 | 200.0 | 200.0 |
| Air proportion in the mixing vessel [%] | 15% | 20% | 25% | 15% | 20% | 25% |
| Air proportion in the mixing vessel [dm$^3$] | 30.0 | 40.0 | 50.0 | 30.0 | 40.0 | 50.0 |
| Cement proportion per batch [kg] | 50.0 | 50.0 | 50.0 | 50.0 | 50.0 | 50.0 |
| Density of the cement [kg/dm$^3$] | 3.1 | 3.1 | 3.1 | 3.1 | 3.1 | 3.1 |
| Mixing water per batch [dm$^3$] | 25.0 | 25.0 | 25.0 | 11.0 | 11.0 | 11.0 |

(continued)

|  | CM | CM | CM | RS | RS | RS |
|---|---|---|---|---|---|---|
| Density of the sand [kg/dm$^3$] | 2.7 | 2.7 | 2.7 | 2.7 | 2.7 | 2.7 |
| Calculated sand volume without air gaps [dm$^3$] | 128.9 | 118.9 | 108.9 | 142.9 | 132.9 | 122.9 |
| Calculated weight of the sand [kg] | 348.0 | 321.0 | 294.0 | 385.8 | 358.8 | 331.8 |
| Natural moisture of the sand [% w/w ] | 4.8% | 4.8% | 4.8% | 4.8% | 4.8% | 4.8% |
| Natural moisture of the sand [dm$^3$] | 16.7 | 15.4 | 14.1 | 18.5 | 17.2 | 15.9 |
| **Calculated water-cement ratio** | **0.83** | **0.81** | **0.78** | **0.59** | **0.56** | **0.54** |
| Note: CM = Standard cementitious sample without admixture<br>RS = Screed of the invention sample with liquid admixture | | | | | | |

### 1.1 Standard cementitious screed

A standard cementitious load-bearing layer with a screed height of 35 mm was placed in one of the shutters. This thickness was chosen in order to facilitate the comparison with the screed of the invention mixture of equal screed height. The formulation of the mortar within a 200 1 batch was as follows:

- 50 kg of cement CEM 32.5 R; Schwenk Zement KG;
  plant: Allmendingen/ Baden-Württemberg
- 25 1 of water added to the sand.
- 294 kg of mineral aggregate 0-8 mm.
- Resulting water-cement ratio 0.78.

To avoid interference, no admixture was added to the batch. This mortar formulation corresponds to one used on the construction site. The amount of the cement and the amount of the mineral aggregate was fixed and water was added until the mortar was ductile enough to be conveniently processed. The mixing period amounted to three minutes. The standard cementitious screed was trowelled 'by hand'.

### 1.2 Screed of the invention

The screed of the invention was placed with a screed height of 35 mm in the other shutter. This thickness was chosen because it represents the desired screed height in the refurbishment sector. The formulation of the mortar within a 200 1 batch was as follows:

- 50 kg of cement CEM 42.5 R; Solnhofer Portland-Zementwerke AG;
  plant: Solnhofen/Bavaria.
- 11 1 of water added to the sand.
- 331.80 kg of mineral aggregate 0-8 mm.
- 5.5 1 ≈ 7 kg of RS-0.8 sheet cut fibres.
- 3 1 ≈ 3 kg of liquid admixture
- Resulting water-cement ratio 0.54.

The quantity of the cement, the mineral aggregate, the fibres and the admixture were fixed and water was added until the mortar was ductile enough to be conveniently processed. The mixing period amounted to three minutes. The screed of the invention was smoothened with the help of a trowelling machine. The mortar was also placed in an additional shutter with the dimensions of 0.30 m x 2 m.

### 1.2.1 Composition of the liquid admixture

The admixture is a modified dispersion of a copolymer based on n-butylacrylate. It comprises in an aqueous dispersion e.g.

5-10 %        Vinyl chloride

(continued)

| 10-20 % | Vinyl acetate |
|---|---|
| 5-10 % | Ethylen |
| 10-20 % | C12 Alcohol ethoxylated (e.g. TERGITOL ®, Dow Chemicals) |
| 20-30 % | Melamin sulfonate |
| 0,1 % | Preservative |
| 0,1 % | Colour |
| up to 100% | Water |

## 2. Second test series: Mixing the screed of the invention with the help of an admixture in powder form in comparison to a standard mortar composition

At first, four shutters with the dimensions of 1.35 x 1.80 m each and a total height of 55 mm, 65 mm, 75 mm and 85 mm were assembled. After that, perimeter isolation strips were installed against the shutters and around a small platform in the middle, which was to carry the measuring instruments. After that, a polystyrene insulating layer (EPS-040-DES) of 2 cm thickness was placed on the concrete slab. Then, the protecting foil was laid on the insulation and subsequently a reinforcing steel mesh was installed within the shutters of 75 and 85 mm height. Onto this steel mesh heating pipes with a diameter of 17 mm were fastened by means of plastic ties. The pipes were placed in a meandering form as it is done with normal heated screeds. The air in the room showed a temperature of 18 degrees Celsius and a relative humidity of 76 % before the screed was laid. The calculated proportions of both mixtures can be seen in the next Table 2. It was opted for a realistic air proportion of 25 % in the mixing vessel.

**Table 2:** Mix proportion of the 2nd test series.

| | CM | CM | CM | RS | RS | RS |
|---|---|---|---|---|---|---|
| Fresh mortar volume in the mixing vessel [$dm^3$] | 200.0 | 200.0 | 200.0 | 200.0 | 200.0 | 200.0 |
| Air proportion in the mixing vessel [%] | 15% | 20% | 25% | 15% | 20% | 25% |
| Air proportion in the mixing vessel [$dm^3$] | 30.0 | 40.0 | 50.0 | 30.0 | 40.0 | 50.0 |
| Cement proportion per batch kg] | 50.0 | 50.0 | 50.0 | 50.0 | 50.0 | 50.0 |
| Density of the cement [$kg/dm^3$] | 3.1 | 3.1 | 3.1 | 3.1 | 3.1 | 3.1 |
| Mixing water per barch [$dm^3$] | 29.0 | 29.0 | 29.0 | 18.0 | 18.0 | 18.0 |
| Density of the sand [$kg/dm^3$] | 2.7 | 2.7 | 2.7 | 2.7 | 2.7 | 2.7 |
| Calculated sand volume without air gaps [$dm^3$] | 124.9 | 114.9 | 104.9 | 135.9 | 125.9 | 115.9 |
| Caculated weight of the sand [kg] | 337.2 | 310.2 | 283.2 | 366.9 | 339.9 | 312.9 |
| Natural moisture of the sand [% w/w] | 4.8% | 4.8% | 4.8% | 4.8% | 4.8% | 4.8% |
| Natural moisture of the sand [$dm^3$] | 16.2 | 14.9 | 13.6 | 17.6 | 16.3 | 15.0 |
| **Calculated water-cement ratio** | **0.90** | **0.88** | **0.85** | **0.71** | **0.69** | **0.66** |
| Note: CM = Standard cementitious sample without admixture RS = Screed of the invention sample with admixture in powder form | | | | | | |

### 2.1 Standard cementitious screed

In one shutter a standard cementitious load-bearing layer with a height of 45 mm was placed and in the other a standard cementitious heated screed with a height of 65 mm was laid. According to DIN 18 560-2, standard unheated cementitious floating screeds (F4) which are loaded with $\leq$ 200 kg/m$^2$ must have a nominal thickness of $\geq$ 45 mm. Standard heated cementitious floating screeds (F4) which are loaded with $\leq$ 200 kg/m$^2$ must have a nominal thickness of $\geq$ 62 mm in combination with heating pipes of 17 mm thickness and of $\geq$ 65 mm in combination with heating pipes of 20 mm thickness. The formulation of the mortar within a 200 1 batch was as follows:

- 50 kg of cement CEM 32.5 R; Solnhofer Portland-Zementwerke AG;

plant: Solnhofen/Bavaria.
- 29 1 of water added to the sand.
- 283.20 kg of mineral aggregate 0-8 mm.
- Resulting water-cement ratio 0.85.

To avoid interference, no admixture was added to the batch. This mortar formulation corresponds to one used on the construction site. The amount of the cement and the amount of the mineral aggregate was fixed and water was added until the mortar was ductile enough to be conveniently processed. The mixing period amounted to three minutes. The standard cementitious screed was trowelled 'by hand'.

## 2.2 The screed of the invention

In one of the shutters the screed of the invention was placed with a height of 35 mm and in the other shutter with a height of 55 mm for heated screeds. These thicknesses were chosen because they represent the desired screed heights in the refurbishment sector. The formulation of the mortar within a 200 1 batch was as follows:

- 50 kg of cement CEM 42.5 R; Solnhofer Portland-Zementwerke AG;
  plant: Solnhofen/Bavaria.
- 18 1 of water added to the sand.
- 312.90 kg of mineral aggregate 0-8 mm.
- 5.5 1 ≈ 7 kg of RS-0.8 sheet cut fibres.
- 6 l ≈ 4.4 kg of admixture in powder form.
- Resulting water-cement ratio 0.66

The amount of the cement, the mineral aggregate, the fibres and of the admixture was fixed and water was added until the mortar was ductile enough to be conveniently processed. The mixing period amounted to three minutes. The screed of the invention was smoothened with the help of a trowelling machine. The mortar was also placed in an additional shutter with the dimensions of 0.30 m x 2 m.

### 2.2.1 Composition of the admixture in powder form

The admixture is a balanced combination of organic and inorganic constituents, which have plasticizing, accelerating and stabilizing effects and should help to achieve a better degree of hydration. This composition influences the rheologic properties of the cement paste by interfacial activity. The grade of viscosity is decreased by the dispersing effect of the additives on the solid particles (modification of the zeta potential). Adsorptive effects reduce the nucleus size but increase the number of nuclei, which accelerates hydration after the dormant phase. The influence on the formation of calcium silicates, calcium aluminates and calcium sulphates as well as on the concentration of OH-ions contributes to the hardening and the hydration process. The admixture in powder form is a composition of salts and mineral additions and comprises e.g.

| | |
|---|---|
| 5-10 % | Polyvinyl chloride |
| 10-20 % | Vinyl acetate |
| 5-10 % | Ethylen |
| 10-30 % | C12 Alcohol ethoxylated, (e.g. TERGITOL ®, Dow Chemicals) |
| 20-30 % | Melamine sulfonate |
| 0,1 % | Dehumidifier |
| 0,1 % | Colour. |

## 3. Test results

### 3.1 Measurement of screed curling

The measurement of the screed curling was completed 56 days after laying the screeds. Subsequently, the pull-off tests were conducted and plate samples were removed for the different tests. In order to establish the behaviour of the screed of the invention and the comparison mixture under stone and ceramic floorings, standard tiles were placed on all four sample areas of the second test series. Before laying the tiles, the sample areas were cut into equal pieces of 1.80 m x 1.30 m. As material for the tiles, porcelain stoneware with an edge length of 34 x 34 cm and a thickness of 6 mm was used. It was glued to the screed with the help of PCI Nanolight adhesive. Right after their bonding to the screed, the tiles were jointed with PCI Nanofug. The screed of the invention was examined on 15/02/2008. No damage (e. g. in the form of cracks) could be established on the screed samples and on the tiles.

### 3.2 Load tests

The first stage of the research work was to look into fresh mortar prisms in order to find out which flexural tensile strength and compressive strength values could be attained by the screed of the invention and a comparison mixture respectively. In addition, sample areas of all mixtures were laid under circumstances similar to the ones on the construction lot. Both, the mesoclimate and the laying methods can be compared to on-site conditions. After waiting long enough for the screed to build up strength, the sample plates were removed.

### 3.2.1 Load tests on prisms

The load tests were conducted on prisms with the dimensions of 4 cm x 4 cm x 16 cm each. All prisms were manufactured according to DIN EN 13 892-1. The mortar was mixed in the vessel of a compressed air conveyor just as it is done on the building lot. When laying the screed in the sample areas, fresh mortar was extracted immediately after it was pumped to the laying location. The mortar was placed into the steel moulds in two layers of about equal thickness. Every layer was compacted entirely with the help of a shock table. Also, the storage of the prisms was arranged according to DIN EN 13 892-1 for cementitious screeds (CT).

The compressive strength and the flexural tensile strength were established after one, three, seven, 14 and 28 days. The most important parameter is, of course, the final strength but also the earlier values are of interest e.g. for the trafficability of the screed on the construction site.

**Table 3: Compressive strength and flexural tensile strength values in the first test series**

| Days | Compressive strength [N/mm$^2$] | | Flexural tensile strength [N/mm$^2$] | |
|---|---|---|---|---|
| | Comparison mixture | The screed of the invention | Comparison mixture | The screed of the invention |
| 1 | 10.6 | 20.9 | 2.2 | 4.2 |
| 3 | 21.0 | 44.3 | 4.0 | 6.8 |
| 7 | 29.9 | 52.3 | 5.2 | 7.1 |
| 14 | 35.5 | 64.4 | 5.5 | 8.2 |
| 28 | 39.2 | 71.5 | 6.5 | 9.1 |

**Table 4: Compressive strength and flexural tensile strength values in the second test series**

| Days | Compressive strength [N/mm$^2$] | | Flexural tensile strength [N/mm$^2$] | |
|---|---|---|---|---|
| | Comparison mixture | The screed of the invention | Comparison mixture | The screed of the invention |
| 1 | 5.9 | 17.8 | 1.2 | 3.4 |
| 3 | 14.1 | 36.3 | 2.9 | 6.1 |
| 7 | 18.1 | 43.1 | 2.3 | 6.2 |
| 14 | 24.0 | 49.4 | 3.9 | 6.6 |
| 28 | 31.0 | 63.0 | 5.1 | 8.5 |

### 3.2.2 Load tests on plate samples

In addition to the load tests on prisms, load tests on plate samples were conducted. For the so-called 'confirmation test', plates of each sample area were cut out dry. To measure the compressive strength, strips were cut out of the sample areas with a length : width relation of 1 : 1. To measure the flexural tensile strength, the extracted plates were cut into test pieces with a width of 6 cm and then cut into the corresponding length, the thickness being about six times the width. Afterwards these specimens were tested by using the 3-point bending test for determining the flexural tensile strength, the thickness being five times the one of the span. The following tables and graphs show the compressive strength and the flexural tensile strength values tested on the comparison mixture in the first and in the second test series:

**Table 5: Compressive strength values of the comparison mixtures in the first test series**

| Sample no. | Width 1 | Width 2 | Height | Breaking load | Compressive strength | |
|---|---|---|---|---|---|---|
| | | | | | | Average |
| | [mm] | [mm] | [mm] | [N] | [N/mm$^2$] | [N/mm$^2$] |
| Comparison mixture | | | | | | |
| Null LV 1 | 33.4 | 32.7 | 33.3 | 22205 | 20.34 | |
| Null LV 2 | 33.5 | 34.5 | 33.8 | 21 312 | 18.45 | |
| Null LV 3 | 33.0 | 33.5 | 33.3 | 19586 | 17.73 | |
| Null LV 4 | 33.4 | 32.5 | 32.9 | 22203 | 20.42 | 19.53 |
| Null LV 5 | 34.9 | 33.8 | 32.5 | 29296 | 24.87 | |
| Null LV 6 | 34.7 | 33.9 | 32.6 | 14123 | 12.02 | |
| Null LV 7 | 33.8 | 34.7 | 32.4 | 26 779 | 22.88 | |
| Sample no. | Width 1 | Width 2 | Height | Breaking load | Compressive strength | |
| | | | | | | Average |
| | [mm] | [mm] | [mm] | [N] | [N/mm$^2$] | [N/mm$^2$] |
| Comparison mixture | | | | | | |
| Null LH 1 | 30.4 | 31.2 | 30.2 | 16507 | 17.36 | |
| Null LH 2 | 30.7 | 31.6 | 30.7 | 16261 | 16.80 | |
| Null LH 3 | 30.6 | 31.5 | 32.1 | 13867 | 14.35 | 15.21 |
| Null LH 4 | 30.4 | 31.6 | 31.1 | 15818 | 16.46 | |
| Null LH 5 | 30.8 | 31.6 | 31.4 | 10743 | 11.05 | |

**Table 6: Flexural tensile strength values of the comparison mixture in the first test series**

| Test date | Sample no. | Span | Test speed | | Breaking load | Site of fracture | | Flexural tensile strength | |
|---|---|---|---|---|---|---|---|---|---|
| | | | | | | Width | Thickness | | Average |
| | | [mm] | [N/mm$^2$*s] | [N/s] | [N] | [mm] | [mm] | [N/mm$^2$] | [N/mm$^2$] |
| Comparison mixture | | | | | | | | | |
| 09.08.07 | N-LV 1 | 146 | 0.1 | 22.1 | 1483 | 60.8 | 27.8 | 6.92 | |
| 09.08.07 | N-LV2 | 146 | 0.1 | 26.2 | 854 | 61.0 | 31.6 | 3.08 | |
| 09.08.07 | N-LV3 | 146 | 0.1 | 25.6 | 969 | 60.2 | 30.3 | 3.83 | |
| 09.08.07 | N-LV4 | 146 | 0.1 | 25.0 | 1201 | 60.2 | 30.0 | 4.85 | 5.74 |
| 09.08.07 | N-LV 5 | 146 | 0.1 | 23.8 | 1933 | 59.7 | 29.4 | 8.24 | |
| 09.08.07 | N-LV6 | 146 | 0.1 | 24.0 | 1754 | 60.8 | 28.4 | 7.82 | |
| 09.08.07 | N-LV7 | 146 | 0.1 | 21.5 | 833 | 60.2 | 27.5 | 3.99 | |
| 09.08.07 | N-LV8 | 146 | 0.1 | 20.4 | 1432 | 60.3 | 27.0 | 7.17 | |

(continued)

| | | | | | | | | | |
|---|---|---|---|---|---|---|---|---|---|
| Comparison mixture | | | | | | | | | |
| 09.08.07 | N-LH 1 | 155 | 0.1 | 24.8 | 945 | 60.6 | 30.8 | 3.83 | |
| 09.08.07 | N-LH2 | 155 | 0.1 | 23.9 | 849 | 60.8 | 29.3 | 3.78 | |
| 09.08.07 | N-LH3 | 155 | 0.1 | 21.7 | 1497 | 60.1 | 31.3 | 5.90 | |
| 09.08.07 | N-LH4 | 155 | 0.1 | 25.9 | 1267 | 59.8 | 32.0 | 4.80 | 5.15 |
| 09.08.07 | N-LH 5 | 155 | 0.1 | 24.3 | 701 | 59.8 | 30.4 | 2.94 | |
| 09.08.07 | N-LH6 | 155 | 0.1 | 27.5 | 1317 | 59.4 | 32.8 | 4.78 | |
| 09.08.07 | N-LH7 | 155 | 0.1 | 25.9 | 1762 | 60.7 | 29.0 | 8.05 | |
| 09.08.07 | N-LH 8 | 155 | 0.1 | 24.2 | 1707 | 60.2 | 30.4 | 7.14 | |

**Table 7: Compressive strength values of the comparison mixture in the second test series**

| Test date | Sample no. | Width 1 | Width 2 | Height | Breaking load | Compressive strength | Average |
|---|---|---|---|---|---|---|---|
| | | [mm] | [mm] | [mm] | [N] | [N/mm2] | [N/mm2] |
| Comparison mixture 65 + 20 mm | | | | | | | |
| 22.10.07 | N65 1.1 | 63.3 | 63.4 | 62.4 | 60258 | 15.0 | |
| 22.10.07 | N65 1.2 | 63.2 | 62.8 | 64.1 | 69667 | 17.6 | |
| 22.10.07 | N65 1.3 | 63.3 | 64.0 | 63.8 | 71 170 | 17.6 | 17.0 |
| 22.10.07 | N65 1.4 | 62.8 | 63.4 | 63.7 | 71 689 | 18.0 | |
| 22.10.07 | N 65 1.5 | 62.7 | 63.7 | 63.0 | 68 112 | 17.1 | |
| 22.10.07 | N65 2.1 | 66.3 | 66.1 | 66.5 | 77 412 | 17.7 | |
| 22.10.07 | N65 2.2 | 65.8 | 66.6 | 66.5 | 79 646 | 18.2 | |
| 22.10.07 | N 65 2.3 | 66.3 | 67.2 | 66.8 | 74566 | 16.7 | 16.2 |
| 22.10.07 | N65 2.4 | 66.5 | 66.4 | 64.5 | 70183 | 15.9 | |
| 22.10.07 | N65 2.5 | 58.4 | 59.4 | 59.6 | 42 797 | 12.3 | |
| Comparison mixture 45 + 20 mm | | | | | | | |
| 22.10.07 | N 45 1.1 | 46.9 | 46.4 | 47.2 | 27204 | 12.5 | |
| 22.10.07 | N 45 1.2 | 46.4 | 46.5 | 47.5 | 33 674 | 15.6 | |
| 22.10.07 | N 45 1.3 | 46.5 | 46.5 | 45.7 | 31058 | 14.4 | 14.5 |
| 22.10.07 | N 45 1.4 | 46.2 | 46.0 | 44.9 | 32 064 | 15.1 | |
| 22.10.07 | N45 1.5 | 46.3 | 47.0 | 46.4 | 32 030 | 14.7 | |
| 22.10.07 | N 45 2.1 | 47.6 | 47.4 | 46.4 | 34 706 | 15.4 | |
| 22.10.07 | N 45 2.2 | 47.5 | 47.4 | 47.3 | 23 128 | 10.3 | |
| 22.10.07 | N 45 2.3 | 46.5 | 47.7 | 47.5 | 29 028 | 13.1 | 13.4 |
| 22.10.07 | N 45 2.4 | 45.3 | 45.7 | 43.7 | 32432 | 15.7 | |
| 22.10.07 | N 45 2.5 | 47.2 | 47.5 | 46.5 | 28 273 | 12.6 | |

**Table 8: Flexural tensile strength values of the comparison mixture in the second test series**

| Test date | Sample no. | Span | Test speed | | Breaking load | Site of fracture | | Flexural tensile strength | |
|---|---|---|---|---|---|---|---|---|---|
| | | | | | | Width | Thickness | | Average |
| | | [mm] | [N/mm²*s] | [N/s] | [N] | [mm] | [mm] | [N/mm²] | [N/mm²] |
| Comparison mixture 65 + 20 mm | | | | | | | | | |
| 12.08.07 | N 65 1.1 | 318 | 0.1 | 50.0 | 1947 | 58.7 | 44.0 | 8.2 | |
| 12.08.07 | N 65 1.2 | 318 | 0.1 | 49.3 | 1958 | 59.4 | 61.9 | 4.1 | |
| 12.08.07 | N 65 1.3 | 318 | 0.1 | 48.0 | 1478 | 59.5 | 64.2 | 2.9 | 6.4 |
| 12.08.07 | N 65 1.4 | 318 | 0.1 | 54.2 | 2245 | 59.8 | 45.5 | 8.6 | |
| 12.08.07 | N 65 1.5 | 318 | 0.1 | 50.5 | 2052 | 59.8 | 44.2 | 8.4 | |
| 12.08.07 | N 65 2.1 | 322 | 0.1 | 51.4 | 2078 | 59.1 | 44.2 | 8.7 | |
| 12.08.07 | N 65 2.2 | 322 | 0.1 | 48.4 | 1 600 | 59.1 | 39.5 | 8.4 | |
| 12.08.07 | N 65 2.3 | 322 | 0.1 | 55.0 | 2197 | 60.7 | 38.3 | 11.9 | 8.3 |
| 12.08.07 | N 65 2.4 | 322 | 0.1 | 51.5 | 1 401 | 59.3 | 47.8 | 5.0 | |
| 12.08.07 | N 65 2.5 | 322 | 0.1 | 49.4 | 1 556 | 59.7 | 40.8 | 7.6 | |
| Comparison mixture 45 + 20 mm | | | | | | | | | |
| 12.08.07 | N 45 1.1 | 228 | 0.1 | 33.5 | 1910 | 60.5 | 43.0 | 5.8 | |
| 12.08.07 | N 45 1.2 | 228 | 0.1 | 39.6 | 2238 | 59.9 | 47.1 | 5.8 | |
| 12.08.07 | N 45 1.3 | 228 | 0.1 | 39.2 | 1814 | 59.7 | 46.3 | 4.8 | 5.6 |
| 12.08.07 | N 45 1.4 | 228 | 0.1 | 38.1 | 1995 | 59.7 | 46.5 | 5.3 | |
| 12.08.07 | N 45 1.5 | 228 | 0.1 | 31.8 | 2016 | 59.9 | 42.9 | 6.2 | |
| 12.08.07 | N 45 2.1 | 240 | 0.1 | 38.2 | 1 518 | 59.8 | 48.2 | 3.9 | |
| 12.08.07 | N 45 2.2 | 240 | 0.1 | 39.6 | 1012 | 60.2 | 45.7 | 2.9 | |
| 12.08.07 | N 45 2.3 | 240 | 0.1 | 38.5 | 1 181 | 60.3 | 45.7 | 3.4 | 3.2 |
| 12.08.07 | N 45 2.4 | 240 | 0.1 | 39.3 | 1 424 | 60.0 | 47.5 | 3.8 | |
| 12.08.07 | N 45 2.5 | 240 | 0.1 | 36.4 | 576 | 59.9 | 43.8 | 1.8 | |

**Table 9: Compressive strength values of the screed of the invention in the first test series**

| Sample no. | Width 1 | Width 2 | Height | Breaking load | Compressive strength | |
|---|---|---|---|---|---|---|
| | | | | | | Average |
| | [mm] | [mm] | [mm] | [N] | [N/mm²] | [N/mm²] |
| Screed of the invention | | | | | | |
| Reno RV 1 | 29.7 | 29.8 | 28.2 | 14 622 | 16.53 | |
| Reno RV 2 | 29.6 | 30.0 | 28.0 | 31 821 | 35.88 | |
| Reno RV 3 | 29.3 | 29.2 | 29.5 | 16 600 | 19.41 | 26.77 |
| Reno RV 4 | 29.9 | 29.4 | 27.8 | 32 445 | 36.95 | |
| Reno RV 5 | 29.6 | 29.6 | 28.4 | 30 264 | 34.55 | |
| Reno RV 6 | 29.3 | 29.9 | 30.0 | 15 108 | 17.28 | |

(continued)

| Screed of the invention | | | | | | |
|---|---|---|---|---|---|---|
| Reno RH 1 | 23.3 | 23.4 | 23.5 | 14 755 | 27.10 | |
| Reno RH 2 | 23.5 | 23.3 | 23.3 | 14 918 | 27.27 | |
| Reno RH 3 | 23.5 | 23.3 | 23.7 | 19 667 | 35.80 | |
| Reno RH 4 | 23.5 | 23.4 | 24.5 | 18 277 | 33.32 | 30.73 |
| Reno RH 5 | 23.6 | 23.0 | 24.4 | 16 927 | 31.24 | |
| Reno RH 6 | 23.1 | 23.3 | 23.2 | 15 555 | 29.00 | |
| Reno RH 7 | 23.4 | 23.3 | 23.9 | 16 825 | 30.85 | |
| Reno RH 8 | 23.6 | 23.3 | 24.0 | 17 185 | 31.28 | |

**Table 10: Flexural tensile strength values of the screed of the invention in the first test series**

| Test date | Sample no. | Span | Test speed | | Breaking load | Site of fracture | | Flexural tensile strength | |
|---|---|---|---|---|---|---|---|---|---|
| | | | | | | Width | Thickness | | Average |
| | | [mm] | [N/mm²*s] | [N/s] | [N] | [mm] | [mm] | [N/mm²] | [N/mm²] |
| Screed of the invention | | | | | | | | | |
| 09.08.07 | RS-RV 1 | 136 | 0.1 | 21.9 | 1816 | 60.6 | 26.6 | 8.64 | |
| 09.08.07 | RS-RV 2 | 136 | 0.1 | 23.6 | 1636 | 60.9 | 27.7 | 7.13 | |
| 09.08.07 | RS-RV 3 | 136 | 0.1 | 21.0 | 1 703 | 60.6 | 25.9 | 8.53 | |
| 09.08.07 | RS-RV 4 | 136 | 0.1 | 21.0 | 1759 | 60.8 | 26.3 | 8.50 | 8.09 |
| 09.08.07 | RS-RV 5 | 136 | 0.1 | 21.9 | 1484 | 60.5 | 26.3 | 7.22 | |
| 09.08.07 | RS-RV 6 | 136 | 0.1 | 22.2 | 1944 | 60.4 | 27.3 | 8.81 | |
| 09.08.07 | RS-RV 7 | 136 | 0.1 | 21.4 | 1 680 | 60.4 | 26.9 | 7.82 | |
| Test date | Sample no. | Span | Test speed | | Breaking load | Site of fracture | | Flexural tensile strength | |
| | | | | | | Width | Thickness | | Average |
| | | [mm] | [N/mm²*s]) | [N/s] | [N] | [mm] | [mm] | [N/mm²] | [N/mm²] |
| Screed of the invention | | | | | | | | | |
| 09.08.07 | RS-RH 1 | 132 | 0.1 | 21.7 | 1 886 | 60.4 | 26.1 | 9.04 | |
| 09.08.07 | RS-RH 2 | 132 | 0.1 | 21.5 | 1 615 | 61.0 | 25.9 | 7.84 | |
| 09.08.07 | RS-RH 3 | 132 | 0.1 | 20.1 | 1 469 | 60.6 | 25.6 | 7.33 | |
| 09.08.07 | RS-RH 4 | 132 | 0.1 | 21.3 | 1 638 | 60.2 | 27.0 | 7.39 | |
| 09.08.07 | RS-RH 5 | 132 | 0.1 | 20.9 | 1 366 | 61.2 | 27.1 | 6.02 | 7.67 |
| 09.08.07 | RS-RH 6 | 132 | 0.1 | 22.0 | 1 670 | 59.9 | 26.5 | 7.87 | |
| 09.08.07 | RS-RH 7 | 132 | 0.1 | 20.6 | 1 695 | 60.7 | 25.3 | 8.66 | |
| 09.08.07 | RS-RH 8 | 132 | 0.1 | 21.5 | 1 554 | 60.8 | 26.5 | 7.24 | |

**Table 11: Compressive strength values of the screed of the invention in the second test series**

| Test date | Sample no. | Width 1 | Width 2 | Height | Breaking load | Compressive strength | |
|---|---|---|---|---|---|---|---|
| | | | | | | | Average |
| | | [mm] | [mm] | [mm] | [N] | [N/mm$^2$] | [N/mm$^2$] |
| Screed of the invention 55 + 20 mm | | | | | | | |
| 22.10.07 | R55 1.1 | 51.0 | 50.6 | 52.0 | 78 102 | 30.3 | |
| 22.10.07 | R55 1.2 | 50.8 | 51.0 | 51.3 | 82 474 | 31.8 | |
| 22.10.07 | R55 1.3 | 51.0 | 51.5 | 51.1 | 77 983 | 29.7 | 30.8 |
| 22.10.07 | R55 1.4 | 50.9 | 51.2 | 51.1 | 77 051 | 29.6 | |
| 22.10.07 | R55 1.5 | 50.7 | 51.1 | 51.1 | 84 292 | 32.5 | |
| 22.10.07 | R55 2.1 | 53.8 | 53.9 | 53.4 | 69 150 | 23.8 | |
| 22.10.07 | R55 2.2 | 51.4 | 53.9 | 54.3 | 60 905 | 22.0 | |
| 22.10.07 | R55 2.3 | 53.4 | 52.9 | 52.8 | 85 209 | 30.2 | 26.8 |
| 22.10.07 | R55 2.4 | 53.5 | 53.6 | 53.7 | 86 846 | 30.3 | |
| 22.10.07 | R55 2.5 | 52.7 | 53.8 | 52.8 | 78 104 | 27.5 | |
| Test date | Sample no. | Width 1 | Width 2 | Height | Breaking load | Compressive strength | |
| | | | | | | | Average |
| | | [mm] | [mm] | [mm] | [N] | [N/mm$^2$] | [N/mm$^2$] |
| The screed of the invention 35 + 20 mm | | | | | | | |
| 22.10.07 | R35 1.1 | 38.6 | 38.6 | 37.1 | 39 582 | 26.6 | |
| 22.10.07 | R35 1.2 | 38.8 | 38.7 | 35.8 | 43 494 | 29.0 | |
| 22.10.07 | R35 1.3 | 38.4 | 38.3 | 38.1 | 38 481 | 26.2 | 29.2 |
| 22.10.07 | R35 1.4 | 38.4 | 38.5 | 37.4 | 50 827 | 34.4 | |
| 22.10.07 | R35 1.5 | 38.4 | 37.8 | 37.4 | 43 576 | 30.0 | |
| 22.10.07 | R35 2.1 | 34.6 | 34.2 | 34.3 | 31 842 | 26.9 | |
| 22.10.07 | R35 2.2 | 34.8 | 34.6 | 34.4 | 37 694 | 31.3 | |
| 22.10.07 | R35 2.3 | 34.7 | 34.7 | 34.2 | 32 471 | 27.0 | 28.6 |
| 22.10.07 | R35 2.4 | 34.8 | 34.8 | 33.9 | 39 476 | 32.6 | |
| 22.10.07 | R35 2.5 | 34.8 | 34.6 | 34.6 | 30 230 | 25.1 | |

**Table 12: Flexural tensile strength values of the screed of the invention in the second test series**

| Test date | Sample no. | Span | Test speed | | Breaking load | Site of fracture | | Flexural tensile strength | |
|---|---|---|---|---|---|---|---|---|---|
| | | | | | | Width | Thickness | | Average |
| | | [mm] | [N/mm²*s] | [N/s] | [N] | [mm] | [mm] | [N/mm²] | [N/mm²] |
| The screed of the invention 55 + 20 mm | | | | | | | | | |
| 23.10.07 | R55 1.1 | 260 | 0.1 | 42.2 | 1 431 | 58.7 | 30.6 | 10.1 | |
| 23.10.07 | R55 1.2 | 260 | 0.1 | 39.9 | 1 476 | 59.2 | 31.1 | 10.0 | |
| 23.10.07 | R55 1.3 | 260 | 0.1 | 40.4 | 1 769 | 58.1 | 30.3 | 12.9 | 12.6 |
| 23.10.07 | R55 1.4 | 260 | 0.1 | 42.2 | 1 631 | 59.6 | 29.0 | 12.7 | |
| 23.10.07 | R55 1.5 | 260 | 0.1 | 38.7 | 2 508 | 57.8 | 31.1 | 17.5 | |
| 23.10.07 | R55 2.1 | 264 | 0.1 | 43.7 | 1 859 | 59.7 | 25.7 | 18.7 | |
| 23.10.07 | R55 2.2 | 264 | 0.1 | 41.1 | 1 249 | 60.3 | 25.9 | 12.2 | |
| 23.10.07 | R55 2.3 | 264 | 0.1 | 42.6 | 3 922 | 60.0 | 52.7 | 9.3 | 15.2 |
| 23.10.07 | R55 2.4 | 264 | 0.1 | 40.5 | 3 380 | 60.5 | 29.6 | 25.2 | |
| 23.10.07 | R55 2.5 | 264 | 0.1 | 44.0 | 4 397 | 59.9 | 53.0 | 10.3 | |

| Test date | Sample no. | Span | Test speed | | Breaking load | Site of fracture | | Flexural tensile strength | |
|---|---|---|---|---|---|---|---|---|---|
| | | | | | | Width | Thickness | | Average |
| | | [mm] | [N/mm²*s] | [N/s] | [N] | [mm] | [mm] | [N/mm²] | [N/mm²] |
| The srceed of the invention 35 + 20 mm | | | | | | | | | |
| 22.10.07 | R35 1.1 | 171 | 0.1 | 31.5 | 2 144 | 59.4 | 36.4 | 7.0 | |
| 22.10.07 | R35 1.2 | 171 | 0.1 | 283 | 1 508 | 60.0 | 30.6 | 6.9 | |
| 22.10.07 | R35 1.3 | 171 | 0.1 | 22.4 | 1 488 | 60.5 | 30.3 | 6.9 | 6.2 |
| 22.10.07 | R35 1.4 | 171 | 0.1 | 32.2 | 1 459 | 60.0 | 36.7 | 4.6 | |
| 22.10.07 | R35 1.5 | 171 | 0.1 | 23.5 | 1 232 | 60.0 | 31.1 | 5.5 | |
| 23.10.07 | R35 2.1 | 176 | 0.1 | 26.9 | 1 754 | 59.8 | 34.0 | 6.7 | |
| 23.10.07 | R35 2.2 | 176 | 0.1 | 25.2 | 1 286 | 59.8 | 33.5 | 5.0 | |
| 23.10.07 | R35 2.3 | 176 | 0.1 | 28.3 | 1 583 | 59.9 | 34.9 | 5.7 | 5.9 |
| 23.10.07 | R35 2.4 | 176 | 0.1 | 30.7 | 1 643 | 59.4 | 36.9 | 5.4 | |
| 23.10.07 | R35 2.5 | 176 | 0.1 | 29.0 | 1 832 | 59.9 | 35.1 | 6.5 | |

### 3.3 Strength development / Trafficability

The idea was to accelerate the strength development of the screed of the invention by means of a special admixture, which was to lead to an early usability vis-à-vis the comparison mixture. This fact was verified by strength tests at different points in time. For this reason, the compressive strength and the flexural tensile strength values were established after one, three, seven, 14 and 28 days. The aim was to ascertain at what point in time the screed could bear loads without damage. This knowledge is vital e.g. for the trafficability of the screed on the building lot. The load tests were conducted on prisms with the dimensions of 4 cm x 4 cm x 16 cm each. When laying the screed in the sample areas, fresh mortar was extracted after it was pumped to the laying location. The mortar was placed in the steel moulds according to DIN EN 13 892-1. In the tables 3 and 4 the results of both test series can be seen.

A screed is supposed to be trafficable after reaching a compressive strength value of at least

**3.4 Deflection**

With stone and ceramic floor coverings the deflection of screeds is measured in a specially designed test and should not exceed 0.15 mm. This threshold value is not only valid for heated screeds but is universally applicable. A positive influence in practice ought to have also the reinforcement by special sheet cut fibres. The measurements on the comparison mixture and on the screed of the invention showed that both screeds did not comply with these regulations. One part of the specimens failed before reaching 400 N, another part indeed reached 400 N but the deflection was quite high when compared to standards. Only a small part from the 2nd test series fell below the value of 0.15 mm, as demanded in DIN 18 560-2. This discovery was very interesting because it was expected that the thicker comparison mixture would surely fulfill the demands. In reality, not even the comparison mixture of 65 mm thickness fell below the 0.15 mm threshold value. It might be possible to reach the desired deflection with specimens manufactured in the laboratory under ideal conditions but not with samples removed from screeds on the construction site. If the 0.15 mm was a noteworthy limit, no stone and ceramic floorings could be placed on precast slab floorings or on mastic asphalt screeds. However, this is common practice in Germany, Switzerland and Austria and does not lead to damage events if the work is done correctly. Stone and ceramic floorings will even adhere to a screed with deflection values much bigger than 0.15 mm.

In order to establish the behaviour of the screed of the invention and the comparison mixture under stone and ceramic floorings, standard tiles were placed on all four sample areas on 29/11/2007. As material for the tiles, porcelain stoneware with an edge length of 34 x 34 cm and a thickness of 6 mm was used. It was glued to the screed with the help of *PCI Nanolight* adhesive. Right after their bonding to the screed, the tiles were jointed with *PCI Nanofug*. The sample areas produced with the screed of the invention mixture were examined on 15/02/2008. No damage (e. g. in the form of cracks) could be established on the screed samples and on the tiles.

In the view of the author a limitation of the screed deflection at 0.15 mm is not necessary. The standard DIN 18 560-2 should be revised by removing the passages dealing with deflection. Until the standard will be revised the screed of the invention can be categorized as 'special design'

**3.5 Shrinkage behaviour**

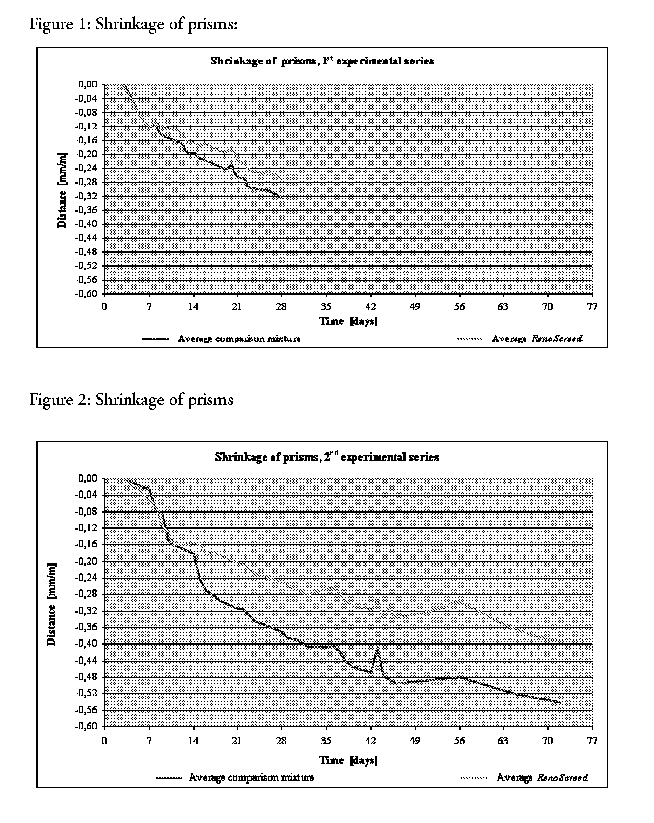

The shrinkage properties were established by measuring the contraction of prisms [4 x 4 x 16 cm], which were stored under conditions equal to the sample areas. While manufacturing the sample areas, 6 x prisms were extracted from each mixture. Three prisms from each mixture were stored next to the sample areas, which were measured regularly to record the shrinkage deformation. Results are presented in Fig. 1 and 2.

Screed strips with unfavourable length-width-ratios are prone to crack formation if the screed strength is high. In order to test the tendency toward crack formation of the screed mixtures, a screed strip of 0.3 x 2.0 m (produced from both screed of the invention mixtures) was placed into a shutter specially manufactured for this purpose. During the entire test period no cracks were found in this screed strip.

**3.6 Drying process**

Since quick usability is to be a major characteristic of the screed of the invention the examination of the drying process was an essential part of the test series. The aim was to cover the screed after seven days. To draw sound conclusions, the tests have taken place at different points in time: One, three, seven, 12, 13, 14 and 28 days after laying the screed. The main measuring instruments were the CM-tester and the kiln, secondary (electronic) measuring instruments were the *Gann* tester and the *Denzel* tester. The drying temperatures in the kiln amounted to 250 degrees Celsius and 105 degrees Celsius for both, the slabs and prisms. The moisture values were read off the CM-tester 10, 30 and 60 minutes after breaking the calcium carbide ampoule inside the steel bottle. When interpreting the results, it has to be taken into account that certain deviations are quite normal with these measuring methods. For the *Gann* method, the following device was used:

• *GANN Hydromette M 4050* with a *B50* probe (serial number 111-0320).

The *Hydromette M 4050* uses microprocessor-based technology to measure the moisture content of building materials and wood as well as the air humidity and temperature.

For the *Denzel* method the following device was used:

*Denzel* G 812. The electronic moisture detector with an analogue display is designed to measure the relative moisture of large screed areas.

**Table 13: Moisture contents (% w/w) of the comparison mixture in the first test series**

| Days | Kiln-dried (≈ 250°C) | Kiln-dried (105°C) | | CM 10 min | CM 30 min | CM 60 min | *Gann*-method | *Denzel*-method |
|---|---|---|---|---|---|---|---|---|
| | | Slab | Prism | | | | | |
| After laying | 9.8 | - | - | - | - | - | - | - |
| 1 d | 8.4 | 7.6 | 7.6 | - | 6.4 | 6.5 | - | - |
| 3 d | 6.8 | 6.5 | 6.8 | - | - | 4.4 | - | 6.5 |
| 7 d | - | 5.1 | 6.5 | - | 3.7 | 4.2 | > 5.9 | - |
| 12 d | - | 4.6 | - | 1.1 | 1.6 | - | > 5.9 | 4.8 |
| 13 d | - | - | - | 1.6 | 2.2 | - | - | - |
| 14 d | - | 4.7 | 3.2 | 1.9 | 2.4 | - | > 5.9 | 5.2 |
| 28 d | | 3.9 | -1.8 | 1.9 | 2.4 | - | 5.8 | 4.7 |

**Table 14: Moisture contents (%w/w) of the comparison mixture (65 + 20 mm) in the second test series**

| Days | Kiln-dried (≈ 250°C) | Kiln-dried (105°C) | | CM 10 min | CM 30 min | CM 60 min | *Gann*-method |
|---|---|---|---|---|---|---|---|
| | | Slab | prism | | | | |
| After laying | 11.0 | | | | | | |
| 1 d | 9.6 | 9.0 | 8.2 | 8.9 | 9.5 | - | 10.0 |
| 3 d | 7.7 | 7.2 | 7.6 | 5.9 | 6.7 | - | 6.2 |
| 7 d | - | 6.4 | 7.6 | 4.4 | 5.2 | > 5.9 | 5.5 |
| 14 d | - | 5.6 | 7.2 | 3.3 | 4.1 | - | 5.4 |
| 28 d | - | 5.5 | 3.6 | 3.6 | 4.4 | 5.8 | 4.6 |
| 56 d | - | 4.8 | - | 1.9 | 2.4 | 3.5 | - |

**Table 15: Moisture contents (% w/w) of the comparison mixture (45 + 20 mm) in the second test series**

| Days | Kiln-dried (≈ 250°C) | Kiln-dried (105°C) | | CM 10 min | CM 30 min | CM 60 min | *Gann*-method |
|---|---|---|---|---|---|---|---|
| | | Slab | prism | | | | |
| After laying | 11.0 | | | | | | |
| 1 d | 10.0 | 7.5 | 8.2 | 9.5 | 10.0 | - | 10.0 |
| 3 d | 9.1 | 7.9 | 7.6 | 4.9 | 5.9 | - | 6.3 |
| 7 d | - | 7.5 | 7.6 | 4.4 | 5.8 | > 5.9 | 5.8 |
| 14 d | - | 6.4 | 7.2 | 2.8 | 3.4 | - | 4.8 |
| 28 d | - | 5.6 | 3.6 | 3.6 | 4.2 | 5.8 | 4.5 |
| 56 d | - | 4.7 | - | 2.7 | 2.9 | 4.0 | 3.4 |

**Table 16: Moisture contents (%w/w) of the screed of the invention in the first test series**

| Days | Kiln-dried (≈ 250°C) | Kiln-dried (105°C) | | CM 10 min | CM 30 min | CM 60 min | *Gann*-method | *Denzel*-method |
|---|---|---|---|---|---|---|---|---|
| | | Slab | Prism | | | | | |
| After laying | 8.1 | - | - | - | - | - | - | - |

(continued)

| Days | Kiln-dried (≈ 250°C) | Kiln-dried (105°C) | | CM 10 min | CM 30 min | CM 60 min | *Gann*-method | *Denzel*-method |
|---|---|---|---|---|---|---|---|---|
| | | Slab | Prism | | | | | |
| 1 d | 6.4 | 5.6 | 5.9 | - | 4.8 | 4.9 | - | - |
| 3 d | 5.7 | 4.7 | 5.3 | - | 1.9 | 2.5 | - | 5.5 |
| 7 d | - | 4.3 | 5.2 | - | 2.9 | 3.2 | 5.7 | - |
| 12 d | - | 4.2 | - | 0.5 | 0.8 | - | 5.9 | 4.9 |
| 13 d | - | - | - | 0.7 | 1.2 | - | - | - |
| 14 d | - | 3.6 | 3.3 | 1.7 | 2.2 | - | 5.8 | 4.4 |
| 28 d | - | 3.0 | 2.5 | 1.7 | 2.3 | - | 5.8 | 4.7 |

**Table 17: Moisture contents (%w/w) of the screed of the invention (55 + 22 mm) in the second test series**

| Days | Kiln-dried (≈ 250°C) | Kiln-dried (105°C) | | CM 10 min | CM 30 min | CM 60 min | *Gann*-method |
|---|---|---|---|---|---|---|---|
| | | Slab | Prism | | | | |
| After laying | 8.2 | - | - | - | - | - | - |
| 1 d | 6.8 | 6.0 | 6.0 | 4.6 | 5.0 | - | 5.5 |
| 3 d | 5.5 | 4.8 | 5.1 | 3.4 | 4.0 | - | 4.8 |
| 7 d | - | 4.7 | 5.2 | 1.4 | 1.9 | 2.8 | 4.3 |
| 14 d | - | 4.2 | 5.1 | 1.0 | 1.5 | 2.3 | 4.5 |
| 28 d | - | 4.1 | 3.8 | 1.9 | 2.3 | 5.5 | 4.2 |
| 56 d | - | 3.9 | - | 0.9 | 1.2 | 3.4 | 3.9 |

**Table 18: Moisture contents (%w/w) of the screed of the invention ( 35 + 20 mm) in the second test series**

| Days | Kiln-dried (≈ 250°C) | Kiln-dried (105°C) | | CM 10 min | CM 30 min | CM 60 min | *Gann*-method |
|---|---|---|---|---|---|---|---|
| | | slab | prism | | | | |
| After laying | 8.2 | - | - | - | - | - | - |
| 1 d | 6.3 | 5.5 | 6.0 | 3.8 | 4.9 | - | 5.4 |
| 3 d | 5.7 | 4.5 | 5.1 | 4.5 | 6.0 | - | 5.0 |
| 7 d | - | 4.5 | 5.2 | 1.2 | 1.7 | 2.4 | 4.5 |
| 14 d | - | 4.0 | 5.1 | 1.2 | 1.7 | 5.1 | 4.8 |
| 28 d | - | 3.9 | 3.8 | 1.9 | 2.3 | 5.1 | 4.0 |
| **56 d** | **-** | **3.7** | **-** | **1.0** | **1.6** | **3.7** | **4.3** |

## 3.7 Surface quality

There are numerous methods of testing the surface quality of a load-bearing layer. The most important ones concern the absorbing capacity of the screed, its surface tensile strength, its scratch resistance and the detection of 'sintered' layers.

### 3.7.1 Absorbing capacity

Suction capacity is an important factor in the context of surface quality. It decides on subsequent treatments (e. g. abrading) and following layers like primers, smoothing compounds and adhesive systems. The absorbing capacity can be tested by placing a droplet of water on the screed surface. Depending on the time it takes to seep away completely, conclusions can be drawn as to whether the suction capacity is high or low.

The surface of the screeds produced from the comparison mixture showed an evidently higher water absorbing capacity than those produced from the screed of the invention mortar. Still, the absorbing capacity of the screed of the invention is sufficient for the application of aqueous primers and adhesives.

### 3.7.2 Surface tensile strength

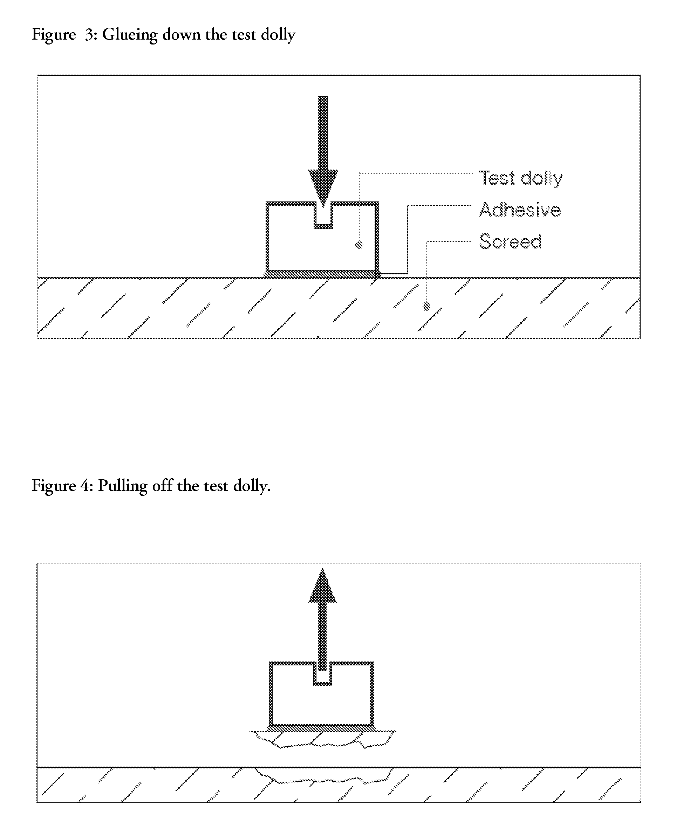

According to DIN 18 560-1 screeds need a convenient surface tensile strength in compliance with the intented use. It can be quantitatively determined by testing the surface tensile strength. A steel dolly is glued onto the screed surface and stripped off again (Fig. 3 and 4). The force necessary to do this is measured. Only convenient electronic testers are approved in order to establish the surface tensile strength.

When testing the surface tensile strength, the following issues have to be observed:

- The age of mineral-bound screeds on the test date has to amount to at least 28 days and the load-bearing layer must be ready to be covered.
- Pre-drilling should only be conducted with strength classes ≥ C50.
- Before carrying out the test, residual dust must be removed from the surface area.
- The adhesive employed for glueing down the dolly must not interfere with the surface conditions of the screed. The adhesive ought to have a paste-like consistency and must show a rapid hardening.
- The adhesive must not protrude over the edge of the test dolly. Adhesive bulges, which often develop around the dolly must be removed.
- The screed surface to be tested must be smooth and the dolly ought to be glued to the substructure entirely. The dolly has to be pulled off the screed at right angles

For the determination of the surface tensile strength of both, the comparison mixture and the screed of the invention three steel dollies were glued to the surface of each sample area after the edge curling measurement.

**Table 19: Surface tensile strength values of all sample areas**

| Test series | Area | Mixture | Thickness | Test dolly 1 [N/mm$^2$] | Test dolly 2 [N/mm$^2$] | Test dolly 3 [N/mm$^2$] | Average [N/mm$^2$] |
|---|---|---|---|---|---|---|---|
| 1 | 1 | *Screed of inv.* | 35 | 2.07 | 1.95 | 1.17 | 1.73 |
| 1 | 2 | Comp. mixt. | 35 | 0.31 | 0.33 | 0.67 | 0.44 |
| 2 | 1 | *Screed of inv.* | 55 | 1.85 | 2.15 | 0.81 | 1.61 |
| 2 | 2 | *Screed of inv.* | 35 | 2.34 | 1.08 | 1.91 | 1.78 |
| 2 | 3 | Comp. mixt. | 65 | 0.15 | 0.35 | 0.31 | 0.27 |
| 2 | 4 | Comp. mixt. | 45 | 0.19 | 0.13 | 0.05 | 0.13 |

### 3.7.3 Scratch test

To avoid dusting surfaces, it is important that the screed should have a convenient hardness. It is especially necessary when the load-bearing layer is trafficked a lot before the flooring is placed. Fines-enriched layers on screed surfaces decrease the surface stability and must be detected before laying the floor covering. A good way to test the surface hardness is to conduct scratch tests. These days, scratch hardness testers are equipped with a spring mechanism, which ensures that the steel spike applies constant pressure. With the help of an adjusting knob, different settings for screeds or for concrete slabs can be chosen. Scratch templates are used to guide the spike in order to perform the desired pattern. With the orthogonal pattern, the scratches run parallel to each other in one direction, then the template is rotated to form an angle of 90 degrees.

By means of the resulting scratch pattern, conclusions can be drawn on the measures to be taken. It is assessed how deep the scratches are and whether the edges are broken out at the intersections. Normally, the orthongonal scratch pattern does not lead to deep scratches in conventional cementitious screeds. The scratches can be seen but they are usually hardly palpable.

In the first and in the second test series scratch tests were carried out on the surfaces of the screed of the invention and of the comparison mixture. Sample areas produced with the screed of the invention showed remarkably good results, whereas the comparison mixture yielded fairly poor and partially insufficient results.

### 3.7.4 'Sintered layers'

Finally, the screed surface was examined for possible 'sintered' layers. In connection with screeds, the term 'sintered' layer describes a fines-enriched film containing a high amount of bonding agent and other particles, which might appear on the screed surface. Usually, this film has to be removed before laying the floor covering. According to the test report 'sintered' layers were not to be found on the screed of the invention sample areas.

### 3.8 Dead weight

An important goal within refurbishment projects is to limit the total weight of the floor components as far as possible. In this context, insulating materials, floorings as well as additional load-bearing layers underneath the screed have to be taken into account. Of course, the main factor is the weight of the screed itself. For sound insulation purposes, wet screeds must have a weight of at least 70 kg/m$^2$. Therefore, a convenient nominal dead weight of unheated screeds meeting the demands in the refurbishment sector could range between 70 and 80 kg/m$^2$. The apparent density of the comparison mixture was determined in the two trial runs at 2.01-2.05 kg/dm$^3$. The apparent density of the screed of the invention was determined at 2.09-2.22 kg/dm$^3$.

For the comparison mixture an average apparent density value of 2.03 kg/dm$^3$ was determined and with the screed of the invention the average apparent density value amounted to 2.155 kg/dm$^3$. The unheated comparison mixture with a thickness of 45 mm shows an average dead weight of 91.35 kg/m$^2$, whereas the unheated screed of the invention of 35 mm thickness has an average weight of only 75.425 kg/m$^2$. The heated comparison mixture of 65 mm thickness shows an average dead weight of 131.95 kg/m$^2$, whereas the heated screed of the invention of 55 mm thickness has an average weight of only 118.525 kg/m$^2$. It can be concluded that the weight of the screed of the invention could considerably be reduced in relation to the comparison mixture. The target density of 70-80 kg/m$^2$ with unheated screeds could be achieved by reaching a dead weight of 75.425 kg/m$^2$.

## Claims

1. Floating screed comprising cement, mineral aggregates, metal fibres, water and an admixture **characterised in that** this admixture is a composition consisting essentially of vinyl chloride, vinyl acetate, ethylen, melamine sulfonate and one or more ethoxylated C3 to C20 secondary alcohol or combinations thereof

2. Floating screed according to claim 1 wherein the liquid admixture is an aqueous dispersion of about 5-10 % vinyl chloride, 10-20 % vinyl acetate, 5-10 % ethylen, 10-30 % ethoxylated C3 - C12 secondary alcohol or combinations thereof, 20-30 % melamine sulfonate, optionally 0,1 % preservative agent, optionally 0,1 % colour.

3. Floating screed according to claim 1 wherein the admixture in powder form is an mixture of about 5-10 % vinyl chloride, 10-20 % vinyl acetate, 5-10 % ethylen, 10-30 % ethoxylated C12 - C20 secondary alcohol or combinations thereof, 20-30 % melamine sulfonate, optionally 0,1 % preservative agent, optionally 0,1 % colour.

4. Floating screed according to claims 1 to 3 wherein the melamine sulfonate of the admixture is polymerised.

5. Floating screed according to any of the previous claims comprising

    - 67 - 82% mineral aggregates
    - 8 - 15% cement
    - 0,5 - 3% metal fibres
    - 1 - 4,5% water
    - 0.2 - 1% admixture.

6. Floating screed according to any of the previous claims further **characterised in that** the final mixture has a water-cement ration of 0.5 to 0.8.

7. Method to lay a extra thin floating screed on floor constructions, particularly adapted for the use in renovation projects comprising the preparation of a extra thin floating screed made out - 67 - 82% mineral aggregates, 8 - 15% cement,

0,5 - 3% metal fibres, 1 - 4,5% water, and 0.2 - 1% admixture **characterised in that** this admixture is a composition consisting essentially of the organic substances vinyl chloride, vinyl acetate, ethylen, melamine sulfonate and one or more ethoxylated C 3 to C20 secondary alcohols or combinations thereof; compressing the freshly laid screed with a trowelling machine thus leading to a screed with a surface tensile strength of at least 1.60 to 1.80 N/mm2 measured on day 28 and measured as an average of 3 measurements.

8. Method according to claim 7 **characterised in that** the screed 7 days after laying has an apparent density value of at least 2,08 kg/dm3.

9. Method according to claim 7 **characterised in that** prisms of the screed have 7 days after laying a compressive strength between 35 and 50 N/mm2 and/or 28 days after laying a compressive strength between 55 and 70 N/mm2.

10. Method according to claim 7 **characterised in that** on day 7 the screed has a residual moisture content of less or equal 2 % measured with the Calzium-Carbid-Method after 10 minutes.

11. Method according to claim 7 **characterised in that** on day 28 the screed shows a shrinkage of about -0,2 to -0,4 mm/m.

12. Use of the floating screed according to any of the previous claims for renovation projects and/or the renovation of floor constructions.

Figure 1: Shrinkage of prisms:

Figure 2: Shrinkage of prisms

Figure 3: Glueing down the test dolly

Test dolly
Adhesive
Screed

Figure 4: Pulling off the test dolly.

Europäisches
Patentamt

European
Patent Office

Office européen
des brevets

# DECLARATION

**Application Number**

which under Rule 63 of the European Patent Convention EP 10 15 2766
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>C04B24/02<br>C04B24/12<br>C04B28/02 |

In the case of the present application, the lack of disclosure (Article 83 EPC) is such that a meaningful search of the claimed subject-matter of claims 1-12 could not be carried out (Rule 63 EPC) for the following reasons: The present application is directed towards a floating screed comprising cement, mineral aggregates, metal fibres, water and an admixture characterized in that this admixture is a composition consisting essentially of vinyl chloride, vinyl acetate, ethylene, melamine sulfonate and one or more ethoxylated C3 to C20 secondary alcohol or combinations thereof. First, one has to observe that it would be technically impossible to use ethylene gas in a screed composition, because the gas would escape before the screed composition could harden. Second, it appears that the actual admixture should contain a kind of a copolymer of vinyl chloride, vinyl acetate and ethylene rather than said individual monomers, as vague references in the description point into this direction, cf. page 3, lines 30-31 and page 13, line 14. The description, however, contains no disclosure whatsoever, whether in actual fact a copolymer of the above mentioned monomers should be used in the admixture, and if this is the case, how said copolymer should be obtained. Therefore, from the description the person skilled in the art obtains no information how to carry out the invention and consequently cannot put the invention into practice. For the reasons detailed above, no search report is to be issued for the present patent

-/--

| Place of search | Date | Examiner |
|---|---|---|
| Munich | 19 August 2010 | Nemes, Csaba A. |

EPO FORM 1504 (P04F37)

**Europäisches Patentamt**

**European Patent Office**

**Office européen des brevets**

## DECLARATION

**Application Number**

which under Rule 63 of the European Patent Convention EP 10 15 2766
shall be considered, for the purposes of subsequent
proceedings, as the European search report

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason:<br><br>application. The applicant's attention is drawn to the fact that a search may be carried out during examination following a declaration of no search under Rule 63 EPC, should the problems which led to the declaration being issued be overcome (see EPC Guideline C-VI, 8.2). | |
| **Place of search** Munich | **Date** 19 August 2010 | **Examiner** Nemes, Csaba A. |

EPO FORM 1504 (P04F37)